# FASCICULE DE BREVET EUROPEEN

(11) **EP 0 791 296 B1**
(45) Date de publication et mention de la délivrance du brevet: **02.05.2003**
(21) Numéro de dépôt: 96200359.6
(22) Date de dépôt: 14.02.1996
(51) Int. Cl.: A23F 5/24, A23F 3/16

(54) **Procédé de préparation d'une boisson fermentée.**
Verfahren zur Herstellung eines fermentierten Getränkes.
Process for preparing a fermented beverage.

(43) Date de publication de la demande: 27.08.1997
(73) Titulaire: SOCIETE DES PRODUITS NESTLE S.A., 1800 Vevey (CH)
(72) Inventeur: Wood, Robert Dustan, CH-1274 Signy (CH); Rippstein, Michel, CH-1434 Ependes (CH); Baensch, Johannes, Landridge Cond., Singapore 0511 (SG)
(74) Mandataire: Wavre, Claude-Alain

(56) Documents cités:
- DATABASE WPI Week 9543 Derwent Publications Ltd., London, GB; AN 95-328800 XP002009208 & CN-A-1 094 259 (CHUANGYI SCI & TECH DEV CO)
- BIOCHEMISCHE ZEITSCHRIFT, vol. 192, 1928, pages 176-187, XP000576888 S. HERMANN: "Über die sogenannte Kombucha "
- Z. LEBENSM. UNTERS. FORSCH., vol. 198, no. 3, 1994, pages 258-261, XP002009206 J. REISS: "Influence of different sugars on the metabolism of the tea fungus"
- BIOTECHNOLOGY LETTERS, vol. 18, no. 2, 1996, pages 139-142, XP000576529 P. BLANC: "Characterization of the tea fungus metabolites"
- CHEMICAL ABSTRACTS, vol. 107, no. 21, 23 Novembre 1987 Columbus, Ohio, US; abstract no. 196558, XP002009207 & CN-A-8 510 359 (BEJING FOODSTUFFS INSTITUTE)
- PHARMACEUTICA ACTA HELVETICA, vol. 32, no. 4, 1957, pages 133-154, XP000576887 K. STEIGER ET AL.: "Über den Teepilz"
- DEUTSCHE LEBENSMITTEL-RUNDSCHAU, vol. 83, no. 9, 1987, pages 286-290, XP000575563 J. REISS: "Der Teepilz und seine Stoffwechselprodukte"
- DATABASE WPI Week 9246 Derwent Publications Ltd., London, GB; AN 92-377558 XP002009209 & JP-A-04 278 072 (KANEBO LTD)

## Description

La présente invention a pour objet un procédé de préparation d'une boisson fermentée ainsi que la boisson fermentée obtenue par ce procédé.

La préparation de boissons fermentées, notamment de thé fermenté par une souche de levure et/ou une souche de bactérie, est connue depuis longtemps.

Traditionnellement, la fermentation du thé se fait en surface durant une dizaine de jours voire même plus longtemps. La mère est de composition variable, elle contient notamment des polysaccharides et croît rapidement jusqu'à devenir encombrante. Aussi, par la mise en oeuvre d'un procédé traditionnel, il n'est pas possible de produire un thé fermenté en grandes quantités.

Deutsche Lebensmittel-Rundschau, 83, 286-290, 1987 décrit un procédé de préparation de boissons fermentées, notamment d'un thé noir fermenté, dans lequel on effectue une fermentation en une seule étape d'un filtrat de thé noir par une souche de levure, notamment une souche de *Schizosaccharomyces pombe*, et une souche de bactérie, notamment une souche d'*Acétobacter xylinum*, pendant six jours, de manière à obtenir une boisson au goût agréable. La fermentation ne se fait pas en surface mais présente l'inconvénient d'être relativement longue.

CN-A-1094259 (Abrégé WPI AN=95-328800) décrit un procédé de préparation d'une boisson fermentée à base de thé et de sucre, dans lequel, après fermentation avec de la levure de thé, la boisson obtenue est filtrée, mélangée, mise en bouteilles et stérilisée.

Biochemische Zeitschrift, 1928, pages 176-187 est une étude des propriétés et des effets du champignon du thé.

Z. Lebensm. Unters. Forsch., 1994, No3, pages 258-261 est une étude de l'influence de différents sucres sur le métabolisme du champignon du thé, celui-ci étant formé d'amas de cellules de levure prises dans une matrice de bactéries de l'acide acétique et de cellulose.

Biotechnology Letters, février 1996, pages 139-142 caractérise les métabolites du champignon du thé.

La présente invention a pour but de proposer un procédé de préparation d'une boisson fermentée dans des conditions particulièrement simples et en un temps de préparation relativement court permettant ainsi la production d'une boisson fermentée en grandes quantités.

A cet effet, dans le procédé de préparation d'une boisson fermentée selon la présente invention:
- on prépare un extrait aqueux à partir de 0,5-2% de thé ou de café,
- on ajoute à cet extrait 4-13% de sucre,
- on effectue une fermentation en une ou plusieurs étapes avec au moins une souche de levure et au moins une souche bactérienne dans un fermenteur sous une pression relative de 50-80 kPa, tout en brassant et en aérant,
- on écarte les insolubles de la boisson fermentée,
- puis on la traite thermiquement à 85-140° C pendant 30 s à 15 min.

On a constaté avec surprise qu'un tel procédé permet effectivement de produire en grandes quantités une boisson fermentée au goût agréable en un temps de préparation court.

Pour mettre en oeuvre le présent procédé, on prépare donc un extrait aqueux à partir de 0,5-2% de thé ou de café.
Si l'on prépare l'extrait aqueux à partir de thé, on infuse 0,5-2% de thé noir ou vert dans de l'eau bouillante pendant 3-30 min. Pour ce faire, on peut infuser le thé dans un sachet filtre plongé dans l'eau bouillante, par exemple. Mais l'on peut également infuser le thé directement dans l'eau bouillante, puis effectuer une centrifugation ou une filtration, de manière à séparer les insolubles de l'extrait aqueux, par exemple.
Si l'on prépare l'extrait aqueux à partir de café, on dilue 0,5-2% de café soluble dans de l'eau bouillante.

De préférence, on ajoute à l'extrait aqueux 4-13% de sucre, notamment du saccharose, comme substrat pour la fermentation par au moins une souche de levure.

On peut inoculer à l'extrait aqueux, pour la fermentation en une ou plusieurs étapes, 0,02-0,2% d'une culture contenant 10⁷ à 10¹⁰ germes d'une souche de levure, notamment une souche de *Saccharomyces cerevisiae*, de manière à produire de l'éthanol, et 0,2-1,5% d'une culture contenant 10⁷ à 10⁹ germes d'une souche bactérienne, notamment une souche *d'Acétobacter* ou une souche de *Gluconobacter*, de manière à acidifier l'extrait aqueux.

Pour la fermentation par au moins une souche de levure, on peut utiliser comme souche de *Saccharomyces cerevisiae* celle commercialisée sous la dénomination DCL Spady par The Distillers Company Limited, Collingwood House, Sutton, Surrey SM3 AT England ou celle commercialisée sous la dénomination Castelli par Laboratorio Zimotecnico Italiano, via dei Setti Santi 28, IT-Florence, par exemple.

Pour la fermentation par au moins une souche bactérienne, on peut notamment utiliser la souche d'*Acétobacter*, déposée le 16 janvier 1996, selon le traité de Budapest, à la Collection Nationale de Microorganismes, INSTITUT PASTEUR, 25 Rue du Docteur Roux, F-75724 PARIS CEDEX 15, France, où elle a reçu le numéro de dépôt CNCM I-1656. On peut également utiliser la souche de *Gluconobacter suboxydans* accessible à la Collection DEUTSCH SAMMLUNG VON MIKROORGANISMEN, DE-BRAUNSCHEIG, où elle a reçu le numéro de dépôt DSM 50049, par exemple.

On effectue la fermentation dans un fermenteur sous une pression relative de 50-80 kPa. On peut notamment utiliser comme fermenteur, un fermenteur de type PAC - Fermenteur APP No 9-273-300-68, commercialisé par Chemap SA, CH-8604 VOLKETSWIL.

Dans un premier mode préféré de réalisation du procédé selon la présente invention, on inocule à l'extrait aqueux simultanément une souche de levure et une souche bactérienne et l'on effectue la fermentation en une seule étape en conditions aérobies, à 27-32° C pendant 2-10 h.
De préférence, on ajuste le pH de l'extrait aqueux à une valeur de 4 à 5,5 avant la fermentation, de manière à faciliter la fermentation par la souche de levure.

Dans un second mode préféré de réalisation du procédé selon la présente invention, on effectue la fermentation en conditions aérobies en deux étapes. Pour ce faire, on inocule à l'extrait aqueux tout d'abord une souche de levure et l'on laisse fermenter à 27-32° C, pendant 15-27 h. Puis on inocule à l'extrait aqueux une souche bactérienne et l'on laisse fermenter à 20-32° C pendant 3-9 h.
De préférence, on ajuste la température du milieu à 17-25° C avant d'inoculer la souche bactérienne, de manière à ralentir la formation d'éthanol due à la fermentation par la souche de levure.

En fin de fermentation en une ou plusieurs étapes, on peut abaisser la température à 0-12° C, de maitière à diminuer la production d'éthanol due à la fermentation par la souche de levure et l'acidification due à la fermentation par la souche bactérienne, par exemple.

Puis, on peut écarter les insolubles de la boisson fermentée par centrifugation ou par filtration, par exemple.

De préférence, on traite alors thermiquement la boisson fermentée à 85-140° C pendant 30 s à 15 min, de manière à inactiver les levures et les bactéries et à éliminer tous les agents pathogènes.

La présente invention a également pour objet la boisson fermentée obtenue par la mise en oeuvre dudit procédé.

Le procédé de préparation d'une boisson fermentée selon la présente invention est décrit plus en détails dans les exemples non limitatifs ci-après. Dans ces exemples, les pourcentages et parties sont donnés en poids, sauf indication contraire. Les mesures de la teneur en éthanol et de la teneur en acide acétique desdites boissons fermentées ont été obtenues par la méthode de mesure enzymatique Bohringer(R). De plus, le pH a été mesuré par électrodes.

### Exemple comparatif 1

On prépare du thé fermenté.

Dans une simple cuve ouverte, on infuse 1 % de thé vert dans de l'eau bouillante pendant 10 min. Pour ce faire, on plonge un sachet filtre contenant 1,2 kg de thé vert dans l'eau bouillante.

On retire le sachet filtre et l'on ajoute 11 % de saccharose à l'extrait aqueux dont la température a été préalablement ajustée à 30° C.

On effectue la fermentation en deux étapes. A cet effet, on inocule tout d'abord à l'extrait aqueux 0,1 % d'une culture contenant 10⁸ germes de la souche *Saccharomyces cerevisiae* Castelli et on laisse fermenter à 30° C pendant 19 h. Puis on abaisse la température de l'extrait aqueux à 20° C, avant d'inoculer à l'extrait aqueux 1% d'une culture contenant 10⁸ germes de la souche d'*Acetobacter* CNCM I-1656 et l'on laisse fermenter à 20° C pendant 7 h, tout en brassant et en aérant, de manière à fournir un apport en oxygène.

En fin de fermentation, on abaisse la température de l'extrait aqueux à 5° C.

Puis, on isole le thé fermenté en écartant les insolubles par filtration.

Enfin, on stérilise à 140° C pendant 40 s le thé fermenté que l'on a préalablement conditionné.

On obtient ainsi un thé fermenté au goût de pomme, ayant un pH de 3,4 et présentant une teneur en éthanol de 0,32% et une teneur en acide acétique de 0,36%.

### Exemple comparatif 2

On prépare du thé fermenté.

Dans une simple cuve ouverte, on infuse 1 % de thé vert dans de l'eau bouillante pendant 20 min. Pour ce faire, on plonge un sachet filtre contenant 1,2 kg de thé vert dans l'eau bouillante.

On retire le sachet filtre et l'on ajoute 7% de saccharose à l'extrait aqueux dont la température a été préalablement ajustée à 30° C.

On effectue la fermentation en une seule étape. Pour ce faire, avant la fermentation on ajuste le pH de l'extrait aqueux à 5 puis on inocule à l'extrait aqueux simultanément 0,05% d'une culture contenant 10⁸ germes de la souche *Saccharomyces cerevisiae* Castelli et 0,5% d'une culture contenant 10⁸ germes de la souche de *Gluconobacter suboxydans* DSM 50049 et l'on laisse fermenter à 30° C pendant 7 h, tout en brassant et en aérant, de manière à fournir un apport en oxygène.

En fin de fermentation, on abaisse la température de l'extrait aqueux à 5° C.

Puis, on isole le thé fermenté en écartant les insolubles par filtration.

Enfin, on pasteurise à 95° C pendant 5 min le thé fermenté que l'on a préalablement conditionné.

On obtient ainsi un thé fermenté sucré au goût de pomme, ayant un pH de 4,47 et présentant une teneur en éthanol de 0,05% et une teneur en acide acétique de 0,032%.

### exemple comparatif 3

On procède de la manière décrite à l'exemple 2, à l'exception du fait que lors de l'étape de fermentation on inocule 0,05% d'une culture contenant 10⁸ germes de la souche *Saccharomyces cerevisiae* Spady et 0,5% d'une culture contenant 10⁸ germes de la souche de *Gluconobacter suboxydans* DSM 50049.

On obtient ainsi un thé fermenté au goût de pomme, ayant un pH de 4,45 et présentant une teneur en acide acétique de 0,05%. Ledit thé fermenté contient de l'éthanol à l'état de traces.

### Exemple 4

On infuse 1 % de thé vert dans de l'eau bouillante pendant 10 min. Pour ce faire, on plonge un sachet filtre contenant 1,2 kg de thé dans l'eau bouillante.

On retire le sachet filtre et l'on recueille dans un fermenteur de type PAC - Fermenteur APP No9-273-300-68, commercialisé par Chemap SA, CH-8604 VOLKETSWIL, l'extrait aqueux auquel on ajoute 11 % de saccharose.

On effectue la fermentation en deux étapes. A cet effet, on ajuste la température du fermenteur à 30° C. On ajuste la pression à 60 kPa, de manière à avoir une concentration en oxygène de 10 mg/l dans le milieu de fermentation. On ajuste l'injection d'air dans le milieu de fermentation à 1000 l/h pour maintenir une concentration en oxygène stable. Enfin, on ajuste l'agitation du milieu de fermentation à 400 t/min, de manière que l'ensemble de l'extrait aqueux soit convenablement oxygéné au cours de la fermentation.

Dans ces conditions, on inocule à l'extrait aqueux 0,1 % d'une culture contenant 10⁸ germes d'une souche de *Saccharomyces cerevisiae* Castelli et l'on laisse fermenter à 30° C pendant 19 h. Puis on abaisse la température de l'extrait aqueux à 20° C et l'on ajuste la pression à 70 kPa, avant d'inoculer à l'extrait aqueux 1% d'une culture contenant 10⁸ germes d'une souche d'*Acetobacter* CNCM I-1656 pendant 7 h.

En fin de fermentation, on abaisse la température de l'extrait aqueux à 5° C.

Puis, on isole le thé fermenté en écartant les insolubles par filtration.

Enfin, on stérilise à 140° C pendant 40 s le thé fermenté que l'on a préalablement conditionné.

On obtient ainsi un thé fermenté au goût de pomme, ayant un pH de 3,4 et présentant une teneur en éthanol de 0,32% et une teneur en acide acétique de 0,36%.

### exemple comparatif 5

On prépare du café fermenté.

Pour ce faire, on dilue 1% de café soluble dans de l'eau bouillante.

On ajuste la température de l'extrait aqueux à 30° C, avant d'y ajouter 5% de saccharose.

On effectue la fermentation en une seule étape. Pour ce faire, avant la fermentation on ajuste le pH de l'extrait aqueux à 5 puis on inocule à l'extrait aqueux simultanément 0,05% d'une culture contenant 10⁸ germes de la souche *Saccharomyces cerevisiae* Castelli et 0,5% d'une culture contenant 10⁸ germes de la souche d'*Acetobacter* CNCM I-1656 et l'on laisse fermenter à 30° C pendant 7 h, tout en brassant et en aérant, de manière à fournir un apport en oxygène.

En fin de fermentation, on abaisse la température de l'extrait aqueux à 5° C.

Puis, on isole le café fermenté en écartant les insolubles par filtration.

Enfin, on pasteurise à 95° C pendant 5 min le café fermenté que l'on a préalablement conditionné.

On obtient ainsi un café fermenté au goût fruité, ayant un pH de 4,31 et présentant une teneur en acide de 0,03%. Ledit café fermenté contient de l'éthanol à l'état de traces.

## Revendications

1. Procédé de préparation d'une boisson fermentée, dans lequel:
- on prépare un extrait aqueux à partir de 0,5-2% de thé ou de café en infusant 0,5-2% de thé noir ou vert dans de l'eau bouillante pendant 3-30 min ou en diluant 0,5-2% de café soluble dans de l'eau bouillante,
- on ajoute à cet extrait 4-13% de sucre,
- on effectue une fermentation en une ou plusieurs étapes avec au moins une souche de levure et au moins une souche bactérienne dans un fermenteur sous une pression relative de 50-80 kPa, tout en brassant et en aérant,
- on écarte les insolubles de la boisson fermentée,
- puis on la traite thenniquement à 85-140° C pendant 30 s à 15 min.

2. Procédé selon la revendication 1, dans lequel on effectue ladite fermentation en une seule étape en inoculant à l'extrait aqueux simultanément une souche de levure et une souche bactérienne, en conditions aérobes, à 27-32° C pendant 2-10 h.

3. Procédé selon la revendication 1, dans lequel on ajuste le pH dudit extrait aqueux à une valeur de 4 à 5,5 avant la fermentation.

4. Procédé selon la revendication 1, dans lequel on effectue ladite fermentation en conditions aérobes en deux étapes en inoculant à l'extrait aqueux tout d'abord une souche de levure à 27-32° C, pendant 15-27 h, puis en inoculant à l'extrait aqueux une souche bactérienne à 20-32° C pendant 3-9 h.

5. Procédé selon la revendication 2, dans lequel on ajuste la température du milieu à 17-25° C avant d'inoculer la souche bactérienne.

6. Procédé selon la revendication 1, dans lequel on inocule à l'extrait aqueux 0,02-0,2% d'une culture contenant 10⁷ à 10¹⁰ germes de souche de levure pour la fermentation en une ou plusieurs étapes.

7. Procédé selon la revendication 1, dans lequel on inocule à l'extrait aqueux 0,2-1,5% d'une culture contenant 10⁷ à 10⁹ germes de souche bactérienne pour la fermentation en une ou plusieurs étapes.

8. Procédé selon la revendication 1, dans lequel on abaisse la température à 0-12° C en fin de fermentation.

## Patentansprüche

1. Verfahren zur Herstellung eines fermentierten Getränks, bei dem man
- einen wässrigen Extrakt aus 0,5-2% Tee oder Kaffee herstellt, indem man 0,5-2% schwarzen oder grünen Tee in kochendem Wasser 3-30 min ziehen läßt oder indem man 0,5-2% löslichen Kaffee in kochendem Wasser verdünnt,
- diesem Extrakt 4-13% Zucker zusetzt,
- eine Fermentation in einem oder mehreren Schritten mit mindestens einem Hefestamm und mindestens einem Bakterienstamm in einem Fermenter unter einem relativen Druck von 50-80 kPa vornimmt, indem man rührt und belüftet,
- die unlöslichen Anteile aus dem fermentierten Getränk entfernt,
- und es dann während 30 s bis 15 min thermisch bei 85-140°C behandelt.

2. Verfahren nach Anspruch 1, bei dem man die Fermentation in einem einzigen Schritt durchführt, indem man den wässrigen Extrakt gleichzeitig mit einem Hefestamm und einem Bakterienstamm bei aeroben Bedingungen bei 27-32°C während 2-10 h beimpft.

3. Verfahren nach Anspruch 1, bei dem man den pH des wässrigen Extrakts vor der Fermentation auf einen Wert von 4 bis 5,5 einstellt.

4. Verfahren nach Anspruch 1, bei dem man die Fermentation bei aeroben Bedingungen in zwei Schritten durchführt, indem man den wässrigen Extrakt zuerst während 15-27 h bei 27-32°C mit einem Hefestamm beimpft und dann den wässrigen Extrakt während 3-9 h bei 20-32°C mit einem Bakterienstamm beeimpft.

5. Verfahren nach Anspruch 2, bei dem man die Temperatur des Mediums vor der Beimpfung mit dem Bakterienstamm auf 17-25°C einstellt.

6. Verfahren nach Anspruch 1, bei dem man den wässrigen Extrakt für die Fermentation in einem oder in mehreren Schritten mit 0,02-02% einer Kultur beimpft, die 10⁷ bis 10¹⁰ Hefestamm-Keime hält.

7. Verfahren nach Anspruch 1, bei dem man den wässrigen Extrakt für die Fermentation in einem oder in mehreren Schritten mit 0,2-1,5% einer Kultur beimpft, die 10⁷ bis 10⁹ Bakterienstamm-Keime enthält.

8. Verfahren nach Anspruch 1, bei dem man die Temperatur am Ende der Fermentation auf 0-12°C senkt.

## Claims

1. Method for preparing a fermented beverage, wherein :
- an aqueous extract is prepared from 0.5-2 % tea or coffee by infusing 0.5-2 % black or green tea in boiling water for 3-30 min or by diluting 0.5-2 % soluble coffee in boiling water,
- 4-13 % sugar is added to this extract,
- fermentation is carried out in one or more steps with at least one yeast strain and at least one bacterial strain in a fermenter at a relative pressure of 50-80 kPa, while stirring and aerating,
- the insolubles are separated from the fermented beverage,
- the fermented beverage is then heat treated at 85-140°C for 30 s to 15 min.

2. Method according to claim 1, wherein the said fermentation is carried out in a single step by inoculating the aqueous extract simultaneously with a yeast strain and a bacterial strain, under aerobic conditions at 27-32°C for 2-10 h.

3. Method according to claim 1 wherein the pH of the said aqueous extract is adjusted to a value of 4 to 5.5 before fermentation.

4. Method according to claim 1, wherein the said fermentation is carried out under aerobic conditions in two steps by inoculating the aqueous extract first of all with a yeast extract at 27-32°C, for 15-27 h, and then inoculating the aqueous extract with a bacterial strain at 20-32°C for 3-9 h.

5. Method according to claim 2, wherein the temperature of the medium is adjusted to 17-25°C before inoculating with the bacterial strain.

6. Method according to claim 1, wherein the aqueous extract is inoculated with 0.02-0.2 % of a culture containing 10⁷ to 10¹⁰ yeast strain germs for the fermentation in one or more steps.

7. Method according to claim 1, wherein the aqueous extract is inoculated with 0.2-1.5 % of a culture containing 10⁷ to 10⁹ bacterial strain germs for the fermentation in one or more steps.

8. Method according to claim 1, wherein the temperature is lowered to 0-12°C at the end of fermentation.
